# EUROPEAN PATENT APPLICATION

(11) **EP 4 813 730 A1**
(43) Date of publication of application: **30.09.2026**
(21) Application number: 26167462.6
(22) Date of filing: 25.03.2026
(51) Int. Cl.: B60L 53/30, B60L 53/31, B60L 53/302, B60L 53/60

(54) **CHARGING DEVICE**

(30) Priority: 28.03.2025 CN 202510390775
(71) Applicant: Huawei Technologies Co., Ltd., Shenzhen, Guangdong 518129 (CN)
(72) Inventor: LIAN, Zhisheng, Shenzhen 518129 (CN); ZHANG, Xiaoyi, Shenzhen 518129 (CN); HUANG, Ming, Shenzhen 518129 (CN)
(74) Representative: Gill Jennings & Every LLP

(57) **Abstract**

Embodiments of this application provide a charging device, and relate to the field of charging technologies. The charging device includes a device cabinet, a first cabinet door, a plurality of first switch components, a plurality of charging connectors, and a plurality of cables. The device cabinet includes a first cabinet panel and a second cabinet panel that are arranged in a thickness direction of the device cabinet. The first cabinet door is connected to the second cabinet panel or the first cabinet panel. The plurality of first switch components are located in the device cabinet and fastened on the first cabinet panel. The plurality of first switch components are arranged in a width direction of the device cabinet. The first cabinet panel is provided with a cable outlet that is used for the plurality of cables to pass through. A part that is of each cable and that is located outside the device cabinet is electrically connected to one charging connector. A part that is of each cable and that is located in the device cabinet is electrically connected to an output end of at least one first switch component. The charging device further includes a first control board and/or a second control board. The first control board is fastened on a side that is of the plurality of first switch components and that faces away from the first cabinet door. The first control board is located above the cable outlet. The second control board is fastened on the second cabinet panel.

## Description

### TECHNICAL FIELD

This application relates to the field of charging technologies, and in particular, to a charging device.

### BACKGROUND

With development of electric vehicles, construction of charging facilities matching the electric vehicles emerges accordingly. Charging devices (for example, charging piles) can provide charging services for the electric vehicles, and therefore a large quantity of charging devices are mounted in charging stations. To allow one charging device to charge a plurality of to-be-charged devices (for example, electric vehicles), one charging device may include a plurality of charging connectors (for example, chargers).

When the charging device includes the plurality of charging connectors, a large quantity of power distribution apparatuses (for example, a switch component and a fuse) usually need to be disposed in a device cabinet of the charging device, and a plurality of power distribution apparatuses occupy larger space in the device cabinet. In a related technology, to reduce a size of the charging device, a control board of the charging device is usually mounted at a vacant position in the device cabinet. As a result, the power distribution apparatus obstructs the control board, or the control board obstructs the power distribution apparatus. When the control board or the power distribution apparatus needs to be repaired, both the power distribution apparatus and the control board need to be removed from the device cabinet, which is not conducive to maintenance of the charging device.

### SUMMARY

This application provides a charging device, to facilitate maintenance of the charging device by performing a proper layout in a device cabinet of the charging device.

To achieve the foregoing objective, this application uses the following technical solutions.

This application provides a charging device. The charging device includes a device cabinet, a first cabinet door, a plurality of first switch components, a plurality of charging connectors, and a plurality of cables. The device cabinet includes a first cabinet panel and a second cabinet panel that are arranged in a thickness direction of the device cabinet. The first cabinet door is connected to the second cabinet panel or the first cabinet panel. The plurality of first switch components are located in the device cabinet and fastened on the first cabinet panel. The plurality of first switch components are arranged in a width direction of the device cabinet. Input ends of the plurality of the first switch components are configured to electrically connect to a power supply. The plurality of charging connectors are located outside the device cabinet and configured to connect to a to-be-charged device. The first cabinet panel is provided with a cable outlet that is used for the plurality of cables to pass through. The cable outlet is located above the first switch component. A part that is of each cable and that is located outside the device cabinet is electrically connected to one charging connector. A part that is of each cable and that is located in the device cabinet is electrically connected to an output end of at least one first switch component. The charging device further includes a first control board and/or a second control board. The first control board is fastened inside the device cabinet and located on a side that is of the plurality of first switch components and that faces away from the first cabinet door. One board surface of the first control board faces the first cabinet door. The first control board is located above the cable outlet. The second control board is fastened on the second cabinet panel. One board surface of the second control board faces the first cabinet panel.

The input ends of the plurality of first switch components are connected to the power supply (for example, a power grid). After power conversion is performed on a current provided by the power supply, a current is input to the first switch component through the input end of the first switch component. When the first switch component is closed, the first switch component allows the current to be output from the output end of the first switch component. The current output from the output end of the first switch component is transferred to the plurality of charging connectors through the plurality of cables, and then charges a plurality of to-be-charged devices (for example, electric vehicles) through the plurality of charging connectors.

When the charging device includes the first control board, the first control board is disposed on a side that is of the first switch component and that faces away from the first cabinet door. When the first switch component needs to be maintained, after the first cabinet door is opened, interference with maintenance of the first switch component caused by the first control board is reduced. In addition, the first control board is far away from the first cabinet door. In a process of opening the first cabinet door to maintain another apparatus in the device cabinet, a possibility of the first control board being damaged can also be reduced, thereby protecting a circuit board.

In addition, the plurality of first switch components are located in the device cabinet and fastened on the first cabinet panel of the device cabinet. Because the plurality of first switch components are arranged in the width direction of the device cabinet, the plurality of first switch components occupy large space in the width direction of the device cabinet. When the charging device includes the first control board, the first control board is located above the cable outlet. In this way, the first control board and the plurality of first switch components can be staggered, so that a width of the device cabinet is reduced. In addition, the plurality of first switch components do not obstruct the first control board, and a part that is of the cable and that is located in the device cabinet also does not cause significant obstruction to the first control board. After the first cabinet door is opened, the first control board can be repaired without removing the first switch component or the cable.

In addition, when the charging device includes the second control board, the second control board is fastened on the second cabinet panel, so that a possibility of the second control board interfering with the first switch component is reduced. After the first cabinet door is opened, the plurality of first switch components may be maintained by facing the first cabinet panel, and the second control board may be maintained by facing the second cabinet panel. This facilitates maintenance of the charging device.

In an embodiment of this application, a plurality of electronic components on the first control board face the first cabinet door.

When the first cabinet door is closed, the plurality of electronic components (including a controller) on the first control board face the first cabinet door. When the first control board needs to be maintained, after the first cabinet door is opened, the plurality of electronic components on the first control board are oriented toward a person, so that a person can conveniently maintain the electronic components on the first control board.

In an embodiment of this application, the charging device further includes a display. The display is fastened on the second cabinet panel. A display region of the display is exposed outside the device cabinet. The second control board is located above the display.

The display is fastened on the second cabinet panel. After the device cabinet is mounted, the display can be oriented toward a person, so that the person can conveniently observe content on the display. The display is mounted in the device cabinet (the display is not disposed on the first cabinet door). When an apparatus in the device cabinet needs to be maintained, a position of the display does not change (the display does not move with the first cabinet door) in a process of opening the first cabinet door. In this way, an electronic cable connected to the display is not pulled out due to movement of the first cabinet door, and difficulty for a person to maintain the device cabinet is reduced. In addition, in this application, power distribution apparatuses (including the plurality of first switch components) in the device cabinet and the display are respectively located on different sides of the first cabinet door. After the first cabinet door is opened, the plurality of first switch components may be maintained by facing the first cabinet panel, and the display may be maintained by facing the second cabinet panel, so that maintenance efficiency is improved.

When the second control board is further fastened on the second cabinet panel, the second control board is located above the display. In this way, a position of the second control board is higher, and if water enters the inside of the charging device, a risk of the second control board being submerged in water is reduced. In addition, when both the first control board and the second control board are fastened inside the device cabinet, because the first control board is higher than the cable outlet (a position of the first control board is higher), the position of the second control board is also disposed higher, so that the second control board can be close to the first control board. This facilitates a connection between the first control board and the second control board through an electronic cable.

In an embodiment of this application, the charging device further includes a power supply apparatus. The power supply apparatus is located in the device cabinet and connected to the second cabinet panel. The power supply apparatus is located below the display. The power supply apparatus is electrically connected to the power supply. The power supply apparatus is further electrically connected to the first control board and/or the second control board. The power supply apparatus is configured to: perform power conversion on electric energy input by the power supply, and output converted electric energy to the first control board and/or the second control board, to supply power to the first control board and/or the second control board.

The power supply apparatus is an auxiliary power supply. Because the first switch component on the first cabinet panel needs to be connected to the cable, the power supply apparatus is disposed on the second cabinet panel, so that impact of the power supply apparatus on wiring of the first switch component is reduced. In addition, the second control board is located above the display, the power supply apparatus is located below the display, and the second control board, the display, and the power supply apparatus are arranged in the height direction of the device cabinet, so that a size of the device cabinet in the width direction can be reduced, an area occupied by the device cabinet is reduced, and the display can further be disposed at a position that is convenient for a person to view.

In an embodiment of this application, the power supply apparatus is slidable relative to the second cabinet panel in a direction close to or away from the first cabinet door.

The power supply apparatus is disposed to be slidable relative to the device cabinet, to facilitate mounting and removal of the power supply apparatus. In a process of drawing out the power supply apparatus, the power supply apparatus slides in the direction close to or away from the first cabinet door. After the first cabinet door is opened, internal space of the device cabinet communicates with external space. A person draws the power supply apparatus outward, and the power supply apparatus is gradually drawn out of the device cabinet, to remove the power supply apparatus. When the power supply apparatus needs to be mounted, the power supply apparatus is pushed toward the inside of the device cabinet. After the power supply apparatus is located in the device cabinet, the power supply apparatus is continuously pushed toward the inside of the device cabinet in the direction away from the first cabinet door, to complete mounting of the power supply apparatus.

In an embodiment of this application, the charging device further includes a second switch component. The second switch component is fastened on the second cabinet panel. The second switch component and the power supply apparatus are arranged in the height direction of the device cabinet. An input end of the second switch component is configured to electrically connect to the power supply. An output end of the second switch component is electrically connected to the power supply apparatus.

The second switch component (for example, a circuit breaker or a contactor) can control connection and disconnection of a circuit between the power supply apparatus and the power supply. The second switch component is fastened on the second cabinet panel, so that the second switch component and the power supply apparatus are arranged in the height direction of the device cabinet. In this way, space under the display is fully utilized, the size of the device cabinet in the width direction can further be reduced, and an internal layout of the device cabinet is more proper.

In an embodiment of this application, the charging device further includes a second cabinet door. The second cabinet door and the first cabinet door are arranged in the width direction of the device cabinet. The second cabinet door is connected to the second cabinet panel or the first cabinet panel.

The first control board is located on a side that is of the plurality of first switch components and that faces the second cabinet door. In other words, the first control board is closer to the second cabinet door. When the first control board needs to be removed, the second cabinet door may also be opened to expose the first control board, so that a person can conveniently remove the first control board.

In an embodiment of this application, the charging device further includes a plurality of electricity meters. One electricity meter is fastened on each of the first cabinet door and the second cabinet door. The electricity meter on the first cabinet door is exposed outside the device cabinet through a window on the first cabinet door. The electricity meter on the second cabinet door is exposed outside the device cabinet through a window on the second cabinet door. The cable outlet includes a first cable outlet and a second cable outlet that are arranged in the width direction of the device cabinet. The first cable outlet is located on a side that is of the second cable outlet and that faces the first cabinet door. The plurality of charging connectors include a first charging connector and a second charging connector. The first charging connector is electrically connected to a cable that passes through the first cable outlet. The second charging connector is electrically connected to a cable that passes through the second cable outlet. The electricity meter on the first cabinet door is configured to display charging data of the first charging connector. The electricity meter on the second cabinet door is configured to display charging data of the second charging connector.

The electricity meter can display charging data of the charging connector, to measure a charging amount of the charging device. The charging device includes the plurality of charging connectors, and the first cable outlet and the second cable outlet are arranged in the width direction of the device cabinet. Therefore, a cable extending from the first cable outlet and a cable extending from the second cable outlet are also arranged in the width direction of the device cabinet, and a person needs to stand on different sides of the device cabinet to use the first charging connector and the second charging connector. For example, when the first charging connector is used, a person is usually close to the first cabinet door, and when the second charging connector is used, a person is usually close to the second cabinet door. Different electricity meters are disposed on the first cabinet door and the second cabinet door, and display regions of the electricity meters are exposed outside the device cabinet through corresponding windows. When a person uses the first charging connector to charge the to-be-charged device, a charging status of the first charging connector can be obtained by observing the electricity meter on the first cabinet door. Similarly, when a person uses the second charging connector to charge the to-be-charged device, a charging status of the second charging connector can be obtained by observing the electricity meter on the second cabinet door. When a person uses different charging connectors, the electricity meters located on the different sides of the device cabinet facilitate observation of charging values by a person.

In addition, both the first cabinet door and the second cabinet door are adjacent to the second cabinet panel on which the display is located, and the electricity meter is disposed on the first cabinet door and the second cabinet door. This also facilitates comparison, by a person, of data displayed on the display and data displayed on the electricity meter.

In an embodiment of this application, the charging device further includes a protective cover. The protective cover is fastened inside the device cabinet. The protective cover is located on a side that is of the plurality of first switch components and that faces the first cabinet door. The protective cover shields the first switch component.

After the first cabinet door is opened, the protective cover can shield the plurality of first switch components, so that the plurality of first switch components are not exposed, thereby protecting both a person and the plurality of first switch components. When the first switch component needs to be repaired, the protective cover can simply be removed.

In an embodiment of this application, the charging device further includes a functional component. The functional component includes at least one of the following: a heating apparatus, a mix-flow fan, or an emergency stop button. The functional component is located in the device cabinet and fastened on the first cabinet door. The heating apparatus is configured to heat the internal space of the device cabinet. The mix-flow fan is configured to blow air into the device cabinet. The emergency stop button is configured to control the first switch component to disconnect a circuit between the power supply and the charging connector.

At least one of the heating apparatus, the mix-flow fan, or the emergency stop button is disposed on the first cabinet door. After the first cabinet door is opened, the functional component (the heating apparatus, the mix-flow fan, or the emergency stop button) on the first cabinet door is exposed, so that a person can conveniently maintain the functional component. After the first cabinet door is opened, apparatuses on the first cabinet door inevitably collide with a person or a maintenance tool. The heating apparatus, the mix-flow fan, or the emergency stop button are all apparatuses that are not prone to damage. The functional component is disposed on the first cabinet door, so that the first cabinet panel and the second cabinet panel have larger space for mounting damage-prone apparatuses (for example, the circuit board or the electronic component). After the first cabinet door is opened, some apparatuses that are not prone to damage (for example, the functional component) are exposed along with the first cabinet door, and some damage-prone apparatuses are still located in the device cabinet, so that a layout of the internal apparatuses in the device cabinet is more proper, and an overall service life of the charging device is prolonged.

In an embodiment of this application, the charging device further includes a baffle plate. The baffle plate is fastened on the first cabinet door. The baffle plate extends toward the internal space of the device cabinet. The baffle plate is located above the functional component.

After the first cabinet door is opened, liquid dripping from the top of the first cabinet door can be blocked and stopped to some extent due to existence of the baffle plate, so that a possibility of a short circuit occurring among a plurality of apparatuses on the first cabinet door caused by liquid dripping from the top of the first cabinet door is reduced.

In an embodiment of this application, the charging device further includes a plurality of plug holders. The plurality of plug holders are fastened on the second cabinet panel. The plurality of plug holders are located below the display. The plurality of plug holders are arranged in the width direction of the device cabinet.

The plug holder is fastened on the second cabinet panel. When the first cabinet door is opened, the plug holder and the charging connector disposed on the plug holder do not move with the movement of the first cabinet door. In addition, the plug holder and the display are arranged in the height direction of the device cabinet, so that the width of the device cabinet can be reduced, and the area occupied by the device cabinet is reduced.

In an embodiment of this application, the charging device further includes a card reading apparatus. The card reading apparatus is fastened on the first cabinet panel. The card reading apparatus is exposed outside the device cabinet. The card reading apparatus and the display are arranged in the height direction of the device cabinet.

The card reading apparatus is configured to identify an IC card (Integrated Circuit Card, integrated circuit card), so that the charging device can identify an IC card (a bank card, a charging card, or the like) of a user through the card reading apparatus, and perform corresponding charging and fee deduction. The card reading apparatus and the display are arranged in the height direction of the device cabinet, so that the size of the device cabinet in the width direction can be reduced, and the area occupied by the device cabinet is reduced.

In an embodiment of this application, the charging device further includes a mounting plate. The mounting plate is fastened at the bottom of the device cabinet. At least a part of the mounting plate is located on an outer side of the device cabinet. A part that is of the mounting plate and that is located on the outer side of the device cabinet is provided with a through hole. The through hole is used for a fastener to pass through. The fastener is configured to fasten the mounting plate to a specified position.

The mounting plate extends to the outer side of the device cabinet, and the through hole can be used for the fastener to pass through, for example, the through hole can be used for a screw or a rivet to pass through. After the fastener passes through the through hole, the mounting plate can be locked to a specified region (for example, on a ground or a mounting base), so that the device cabinet is fastened. In other words, a person can complete mounting of the charging device without opening the device cabinet in a process of mounting the charging device.

### BRIEF DESCRIPTION OF DRAWINGS

FIG. 1 is a diagram of a structure of a charging device according to an embodiment of this application;
FIG. 2 is a diagram of a structure of another charging device according to an embodiment of this application;
FIG. 3 is a diagram of a partial structure of a charging device according to an embodiment of this application;
FIG. 4 is a diagram of an internal structure of a charging device according to an embodiment of this application;
FIG. 5 is a diagram of a structure of a first direct current power distribution apparatus according to an embodiment of this application;
FIG. 6 is a diagram of a structure of a first control board and a second control board according to an embodiment of this application;
FIG. 7 is a diagram of a structure of a second cabinet door according to an embodiment of this application;
FIG. 8 is a diagram of a structure of a functional component according to an embodiment of this application;
FIG. 9 is a diagram of a structure of another functional component according to an embodiment of this application;
FIG. 10 is a diagram of a structure of a protective cover according to an embodiment of this application; and
FIG. 11 is a diagram of a position of another plug holder according to an embodiment of this application.

Reference numerals:
100: charging device; 101: device cabinet; 1011: first cabinet panel; 1012: second cabinet panel; 1013: first opening; 1014: second opening; 1015: cable outlet; 1016: first cable outlet; 1017: second cable outlet; 102: power conversion apparatus; 103: alternating current power distribution apparatus; 104: first direct current power distribution apparatus; 1041: first switch component; 1042: input metal bar; 1043: output metal bar; 1044: protection component; 105: charging connector; 1051: first charging connector; 1052: second charging connector; 106: cable; 1061: positive cable; 1062: negative cable; 107: main cabinet; 108: second direct current power distribution apparatus; 109: first cabinet door; 110: mounting plate; 1101: through hole; 111: display; 112: card reading apparatus; 1121: radio frequency identification card reader; 1122: sales terminal; 113: fastening plate; 114: plug holder; 115: first control board; 1151: electronic component; 116: second control board; 117: power supply apparatus; 1171: mounting enclosure; 1172: mounting opening; 118: second switch component; 119: wiring terminal; 120: second cabinet door; 121: electricity meter; 1211: window; 122: functional component; 1221: mix-flow fan; 1222: first mix-flow fan; 1223: second mix-flow fan; 1224: heating apparatus; 1225: emergency stop button; 123: protective cover; 1231: air vent; 1232: avoidance groove; 124: display light; 125: baffle plate; 200: power supply.

### DESCRIPTION OF EMBODIMENTS

The following describes the technical solutions in embodiments of this application with reference to the accompanying drawings in embodiments of this application. It is clear that the described embodiments are merely a part rather than all of embodiments of this application.

In this application, unless otherwise expressly specified and limited, orientations or position relationships indicated by terms such as "above", "below", "front", "rear", "left", and "right" may include but are not limited to being defined with respect to orientations of components schematically placed in the accompanying drawings. These directional terms may be relative concepts, may be used for relative descriptions and clarification, and may vary correspondingly based on changes in the placement orientations of the components in the accompanying drawings. Such terms cannot be understood as a limitation on this application.

In this application, the terms "first", "second", and the like are merely intended for a purpose of description, and are intended to distinguish between one element and another element, but shall not be understood as an indication or implication of relative importance or an implicit indication of a quantity of indicated technical features. Therefore, a feature limited by "first", "second", or the like may explicitly or implicitly include one or more features.

In this application, unless otherwise expressly specified and limited, "a plurality of" means two or more.

In addition, in this application, the terms such as "example" or "for example" indicate giving an example, an illustration, or a description. Any embodiment or design scheme described as an "example" or "for example" in this application should not be explained as being more preferred or having more advantages than another embodiment or design scheme. Exactly, use of the term such as "example" or "for example" is intended to present a related concept in a specific manner.

In the accompanying drawings of embodiments of this application, entity structures such as components and assemblies are indicated by guide lines. A structure including a plurality of components is indicated by parentheses or guide lines with solid arrows. Hollow structures such as openings, holes, space, and cavities are indicated by guide lines with hollow arrows.

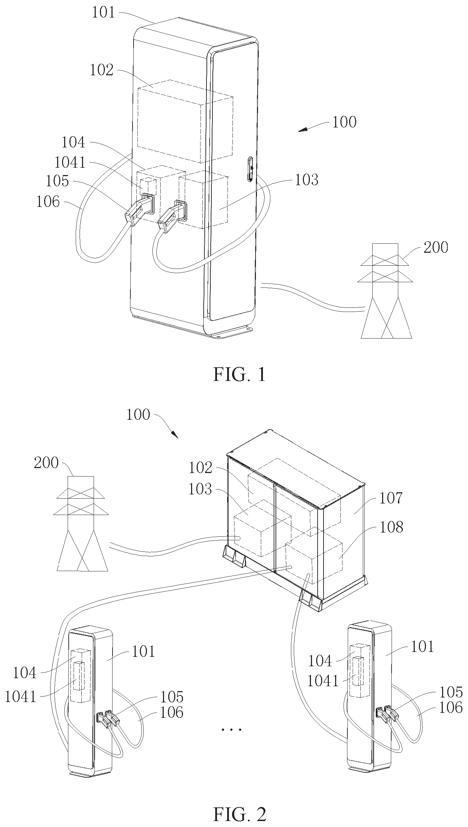

An embodiment of this application provides a charging device 100. FIG. 1 shows an example of a structure of the charging device 100. Refer to FIG. 1. The charging device 100 is an integrated charging pile. The charging device 100 includes a device cabinet 101, a power conversion apparatus 102, an alternating current power distribution apparatus 103, and a first direct current power distribution apparatus 104. The power conversion apparatus 102, the alternating current power distribution apparatus 103, and the first direct current power distribution apparatus 104 are all mounted in the device cabinet 101.

An input end of the alternating current power distribution apparatus 103 is configured to connect to a power supply 200. The power supply 200 may be a power grid. An output end of the alternating current power distribution apparatus 103 is connected to an input end of the power conversion apparatus 102. The power conversion apparatus 102 is configured to: convert an alternating current input by the power supply 200 through the alternating current power distribution apparatus 103 into a direct current, and output the direct current. An output end of the power conversion apparatus 102 is connected to an input end of the first direct current power distribution apparatus 104.

In addition, refer to FIG. 1. The charging device 100 further includes a plurality of charging connectors 105 (for example, a charger) and a plurality of cables 106 (for example, a charger cable). In the embodiment shown in FIG. 1, two charging connectors 105 are disposed, and two cables 106 are also disposed. The plurality of charging connectors 105 are located outside the device cabinet 101. The plurality of charging connectors 105 are configured to connect to a to-be-charged device (for example, an electric vehicle). Each charging connector 105 is connected to the first direct current power distribution apparatus 104 through a corresponding cable 106.

The first direct current power distribution apparatus 104 includes a plurality of first switch components 1041 (for example, an air circuit breaker, a relay, or a contactor). The output end of the power conversion apparatus 102 is electrically connected to input ends of the plurality of first switch components 1041. Output ends of the plurality of first switch components 1041 are electrically connected to the plurality of cables 106. When the plurality of first switch components 1041 connect circuits between the power conversion apparatus 102 and the plurality of cables 106, power output by the power conversion apparatus 102 can be transferred to the plurality of charging connectors 105 through the plurality of cables 106. When the plurality of first switch components 1041 disconnect the circuits between the power conversion apparatus 102 and the plurality of cables 106, the plurality of charging connectors 105 cannot use the power output by the power conversion apparatus 102.

FIG. 2 shows an example of a structure of another charging device 100. Refer to FIG. 2. The charging device 100 is a split charging pile. The charging device 100 includes a main body part and a plurality of terminal parts. The main body part of the charging device 100 includes a main cabinet 107, a power conversion apparatus 102, an alternating current power distribution apparatus 103, and a second direct current power distribution apparatus 108. The power conversion apparatus 102, the alternating current power distribution apparatus 103, and the second direct current power distribution apparatus 108 are all mounted in the main cabinet 107. An input end of the alternating current power distribution apparatus 103 is configured to connect to a power supply 200 (for example, a power grid). The power conversion apparatus 102 is configured to: convert an alternating current input by the power supply 200 into a direct current, and output the direct current. The second direct current power distribution apparatus 108 may distribute the direct current output by the power conversion apparatus 102 to one or more of the terminal parts.

Each terminal part of the charging device 100 includes a device cabinet 101, a first direct current power distribution apparatus 104, a plurality of charging connectors 105, and a plurality of cables 106. For example, in the embodiment shown in FIG. 2, each terminal part is provided with two charging connectors 105, and each terminal part is also provided with two cables 106. The first direct current power distribution apparatus 104 is mounted in the device cabinet 101. The plurality of charging connectors 105 are located outside the device cabinet 101. The first direct current power distribution apparatus 104 includes a plurality of first switch components 1041. Input ends of the plurality of first switch components 1041 are electrically connected to the second direct current power distribution apparatus 108. Output ends of the plurality of first switch components 1041 are electrically connected to the plurality of charging connectors 105 through the plurality of cables 106. In this way, the plurality of charging connectors 105 can output currents (the currents come from the power supply 200) obtained through power conversion by the power conversion apparatus 102.

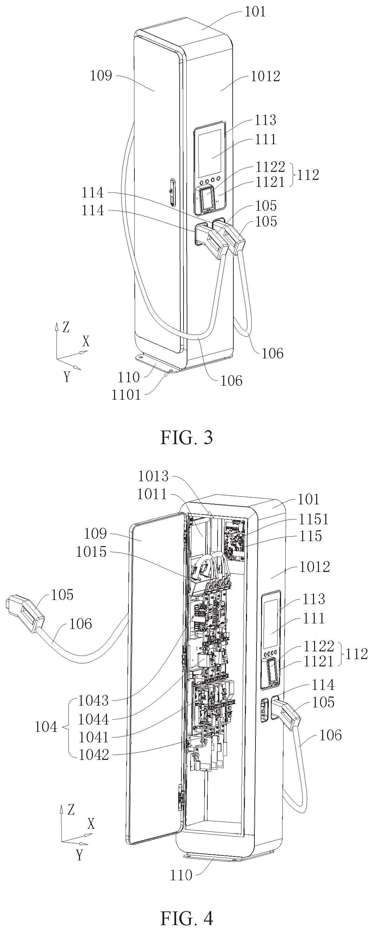

The charging device 100 in FIG. 2 is used as an example. FIG. 3 shows an example of a partial structure of the charging device 100 (the terminal part of the charging device 100) in FIG. 2. FIG. 4 shows an example of an internal structure of the charging device 100 in FIG. 3. Refer to FIG. 3 and FIG. 4. The charging device 100 includes the device cabinet 101 and a first cabinet door 109. The device cabinet 101 is provided with a first opening 1013 (a repair opening) that communicates with internal space of the device cabinet 101. Walls of the device cabinet 101 that enclose the internal space of the device cabinet 101 include a first cabinet panel 1011 and a second cabinet panel 1012. The first cabinet panel 1011 and the second cabinet panel 1012 are arranged in a thickness direction (a Y-axis direction) of the device cabinet 101. The first cabinet panel 1011 is disposed opposite to the second cabinet panel 1012. The first opening 1013 is located between the first cabinet panel 1011 and the second cabinet panel 1012. For example, after the device cabinet 101 is mounted, the first cabinet panel 1011 may be a rear cabinet panel of the device cabinet 101, and the second cabinet panel 1012 may be a front cabinet panel of the device cabinet 101.

The first cabinet door 109 in a closed state is located between the first cabinet panel 1011 and the second cabinet panel 1012, and the first cabinet door 109 is connected to the first cabinet panel 1011 or the second cabinet panel 1012. Refer to FIG. 4. For example, the first cabinet door 109 is connected to the first cabinet panel 1011. The first cabinet door 109 is movable (including rotation, sliding, or the like) relative to the device cabinet 101, for example, the first cabinet door 109 is hingedly connected to (connected via a hinge) the first cabinet panel 1011. The device cabinet 101 can be opened or sealed through the first cabinet door 109. For example, when the first opening 1013 is sealed through the first cabinet door 109, the device cabinet 101 is sealed through the first cabinet door 109. When the first opening 1013 is opened through the first cabinet door 109, the device cabinet 101 is opened through the first cabinet door 109. FIG. 3 shows a case in which the first opening 1013 is sealed through the first cabinet door 109 (the first cabinet door 109 is in the closed state and the device cabinet 101 is sealed through first cabinet door 109). FIG. 4 shows a case in which the first opening 1013 is opened through the first cabinet door 109 (the first cabinet door 109 is in an open state and the device cabinet 101 is opened through the first cabinet door 109).

The device cabinet 101 may be fastened to a specified position in any appropriate manner. For example, refer to FIG. 3. The charging device 100 further includes a mounting plate 110. The mounting plate 110 is fastened at the bottom of the device cabinet 101. At least a part of the mounting plate 110 is located on an outer side of the device cabinet 101. In other words, the mounting plate 110 extends to the outer side of the device cabinet 101. In addition, a part that is of the mounting plate 110 and that is located on the outer side of the device cabinet 101 is provided with a through hole 1101. The through hole 1101 can be used for a fastener to pass through, for example, the through hole 1101 can be used for a screw or a rivet to pass through. After the fastener passes through the through hole 1101, the mounting plate 110 can be locked at a specified position (for example, on a ground or a platform for mounting the device cabinet 101), so that the device cabinet 101 is fastened. The mounting plate 110 is disposed, so that a person can fasten the charging device 100 without opening the device cabinet 101 in a process of mounting the charging device 100, thereby facilitating mounting of the charging device 100.

In some embodiments, refer to FIG. 3. The charging device 100 further includes a display 111. The display 111 is fastened on the second cabinet panel 1012. A display region of the display 111 is exposed outside the device cabinet 101. For example, the display region of the display 111 is exposed outside the device cabinet 101 through an opening on the second cabinet panel 1012. The display region that is of the display 111 and that is exposed outside the device cabinet 101 allows a person to observe content displayed on the display 111 (for example, charging information, a charging status, and the like can be displayed on the display 111). After the device cabinet 101 is mounted, the display 111 can be oriented toward the person, so that a person can observe the content on the display 111.

The display 111 is not disposed on the first cabinet door 109 that serves as a repair door, but instead, the display 111 is mounted on the second cabinet panel 1012 of the device cabinet 101. When a component in the device cabinet 101 needs to be maintained, a position of the display 111 does not change (the display 111 does not move with the first cabinet door 109) in a process of opening the first cabinet door 109. In this way, a wire connected to the display 111 is not pulled out due to movement of the first cabinet door 109, and difficulty for a person to maintain the device cabinet 101 is reduced.

In some embodiments, refer to FIG. 3. The charging device 100 further includes a card reading apparatus 112. The card reading apparatus 112 is fastened on the second cabinet panel 1012, and the card reading apparatus 112 is exposed outside the device cabinet 101. In the embodiment shown in FIG. 3, the card reading apparatus 112 includes a radio frequency identification card reader (RFID card reader) 1121 and a sales terminal (POS machine) 1122, an identification region of the radio frequency identification card reader 1121 is exposed outside the device cabinet 101, and a card insertion region and a password input region of the sales terminal 1122 are exposed outside the device cabinet 101. In some other embodiments, only the radio frequency identification card reader 1121 may be disposed on the second cabinet panel 1012, and no sales terminal 1122 is disposed, or only the sales terminal 1122 may be disposed on the second cabinet panel 1012, and no radio frequency identification card reader 1121 is disposed. In some other embodiments, the card reading apparatus 112 may be a card reading device other than the foregoing two card reading devices. The card reading apparatus 112 is configured to identify an integrated circuit card (Integrated Circuit Card, IC card), so that the charging device 100 can identify an IC card (a bank card, a charging card, or the like) of a user through the card reading apparatus 112, and perform corresponding charging and fee deduction.

In the embodiments shown in FIG. 3 and FIG. 4, the card reading apparatus 112 and the display 111 are arranged in a height direction (a Z-axis direction) of the device cabinet 101. In this arrangement manner, a size of the device cabinet 101 in a width direction (an X-axis direction) can be reduced, and an area occupied by the device cabinet 101 is reduced. In some other embodiments, the card reading apparatus 112 may alternatively be disposed at another appropriate position.

In some embodiments, the display 111 and the card reading apparatus 112 may be integrated into a module, to improve integration of the display 111 and the card reading apparatus 112, and facilitate overall mounting or overall removal of the module formed by integrating the display 111 and the card reading apparatus 112. For example, refer to FIG. 3. The charging device 100 further includes a fastening plate 113, and both the display 111 and the card reading apparatus 112 are fastened on the fastening plate 113. Before assembling the charging device 100, the display 111 and the card reading apparatus 112 may be fastened on the fastening plate 113 in advance, and then the fastening plate 113 is fastened on the second cabinet panel 1012, so that the fastening plate 113 carries the display 111 and the card reading apparatus 112 to be fastened together on the second cabinet panel 1012, and assembly efficiency of the charging device 100 is improved.

In addition, refer to FIG. 3. The charging device 100 further includes the plurality of charging connectors 105. For example, in the embodiment shown in FIG. 3 and FIG. 4, two charging connectors 105 are disposed, and the plurality of charging connectors 105 are located outside the device cabinet 101 and configured to connect to a to-be-charged device. When the plurality of charging connectors 105 are not used, the plurality of charging connectors 105 may be disposed on the device cabinet 101. For example, the charging device 100 further includes a plurality of plug holders 114. In the embodiment shown in FIG. 3 and FIG. 4, two plug holders 114 are disposed and fastened on the second cabinet panel 1012. The two plug holders 114 are arranged in the width direction (the X-axis direction) of the device cabinet 101. Each plug holder 114 is used for inserting a corresponding charging connector 105. In other words, when the charging connector 105 is not used, the charging connector 105 may be inserted into a corresponding plug holder 114.

In the embodiment shown in FIG. 3, the plurality of plug holders 114 are fastened on the second cabinet panel 1012. When the first cabinet door 109 is opened, each plug holder 114 and the charging connector 105 disposed on each charger holder 114 do not move with the movement of the first cabinet door 109.

In some embodiments, a return switch (for example, a micro switch) is disposed on each plug holder 114. After the charging connector 105 is inserted into the corresponding plug holder 114, the return switch on the plug holder 114 is triggered. After the charging connector 105 is removed from the corresponding plug holder 114, the return switch on the plug holder 114 is released. The charging device 100 may determine, by detecting whether the return switch on the plug holder 114 is triggered, whether the charging connector 105 is inserted into the plug holder 114.

In addition, when the plug holder 114 is fastened on the second cabinet panel 1012, an arrangement manner of the plug holder 114 and the display 111 may be disposed as required. For example, refer to FIG. 3. The plug holder 114 and the display 111 are arranged in the height direction (the Z-axis direction) of the device cabinet 101, and the plug holder 114 is located below the display 111. In this arrangement manner, the size of the device cabinet 101 in the width direction (the X-axis direction) can be reduced, and the area occupied by the device cabinet 101 is reduced.

Refer to FIG. 4. The charging device 100 further includes the first direct current power distribution apparatus 104. The first direct current power distribution apparatus 104 is mounted in the device cabinet 101. The first direct current power distribution apparatus 104 is disposed on the first cabinet panel 1011, and the first direct current power distribution apparatus 104 and the display 111 are respectively located on different sides of the first opening 1013. After the first cabinet door 109 is opened, the display 111 may be maintained by facing the second cabinet panel 1012, and the first direct current power distribution apparatus 104 may be maintained by facing the first cabinet panel 1011, so that maintenance efficiency of a person is improved.

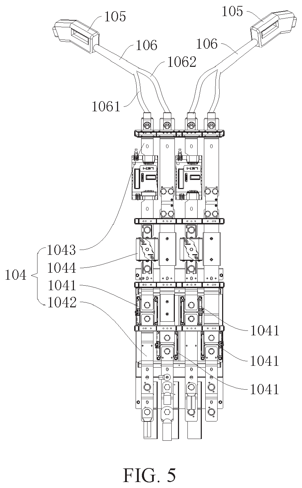

FIG. 5 shows an example of a structure of the first direct current power distribution apparatus 104. Refer to FIG. 4 and FIG. 5. The first direct current power distribution apparatus 104 includes the plurality of first switch components 1041, and the plurality of first switch components 1041 are located in the device cabinet 101 and fastened on the first cabinet panel 1011. The plurality of first switch components 1041 are arranged in the width direction (the X-axis direction) of the device cabinet 101.

Refer to FIG. 4 and FIG. 5. To reduce space occupied by the plurality of first switch components 1041 in the width direction of the device cabinet 101, two adjacent first switch components 1041 may be staggered in the height direction (the Z-axis direction) of the device cabinet 101. In other words, there is a height difference between the two adjacent first switch components 1041.

In some embodiments, refer to FIG. 4. The first direct current power distribution apparatus 104 further includes a plurality of input metal bars 1042 (for example, copper bars or aluminum bars) and a plurality of output metal bars 1043 (for example, copper bars or aluminum bars), each input metal bar 1042 is electrically connected to an input end of a corresponding first switch component 1041, and each output metal bar 1043 is electrically connected to an output end of a corresponding first switch component 1041 (structures such as a protection component may be further disposed between the output metal bar 1043 and the first switch component 1041).

In some embodiments, refer to FIG. 4. The first direct current power distribution apparatus 104 may further include a plurality of protection components 1044. The protection component 1044 may be a fuse, a surge protector, or the like. The protection component 1044 is connected to the input metal bar 1042 or connected to the output metal bar 1043. For example, refer to FIG. 5. When the protection component 1044 is a fuse, the protection component 1044 is fastened between the output end of the first switch component 1041 and the output metal bar 1043. For another example, when the protection component 1044 is a surge protector, an input end of the protection component 1044 is electrically connected to the input metal bar 1042 through a wire, or an input end of the protection component 1044 is electrically connected to the output metal bar 1043 through a wire. In addition, an output end of the protection component 1044 is grounded. When a current or voltage spike occurs in a circuit, the protection component 1044 shunts a current flowing through the input metal bar 1042 or a current flowing through the output metal bar 1043, thereby reducing a risk of damage caused by a surge to another device in a power loop.

A plurality of apparatuses or components (for example, the first switch component 1041, the protection component 1044, the input metal bar 1042, and the output metal bar 1043) included in the first direct current power distribution apparatus 104 may be mounted on the first cabinet panel 1011 one by one, or may be integrated to be together mounted on the first cabinet panel 1011, so that the first direct current power distribution apparatus 104 in the device cabinet 101 is more integrated, and mounting efficiency and subsequent maintenance efficiency of the charging device 100 is greatly improved.

For example, in a process of mounting the first direct current power distribution apparatus 104, the first direct current power distribution apparatus 104 may first be independently assembled. To be specific, the first switch component 1041, the protection component 1044, the input metal bar 1042, and the output metal bar 1043 are all fastened on an independent mounting base, and then the mounting base is mounted on the first cabinet panel 1011. In this way, the first direct current power distribution apparatus 104 can be integrally mounted on the first cabinet panel 1011. In a process of maintaining the first direct current power distribution apparatus 104, the first direct current power distribution apparatus 104 may be overall removed and replaced in a manner of removing the mounting base.

Refer to FIG. 4 and FIG. 5. To connect the first switch component 1041 to the charging connector 105, the charging device 100 further includes the plurality of cables 106. The first cabinet panel 1011 is provided with a cable outlet 1015 that is used for the plurality of cables 106 to pass through.

A part that is of each cable 106 and that is located in the device cabinet 101 is electrically connected to an output end of at least one first switch component 1041. For example, refer to FIG. 5. A positive cable 1061 and a negative cable 1062 of each cable 106 each are electrically connected to an output end of one first switch component 1041. When the first direct current power distribution apparatus 104 includes the plurality of output metal bars 1043, the positive cable 1061 and the negative cable 1062 of each cable 106 each are connected to output metal bars 1043. The other part that is of each cable 106 and that is located outside the device cabinet 101 is connected to a corresponding charging connector 105.

The input end of the first switch component 1041 is electrically connected to the power supply 200. For example, refer to FIG. 5. When the first direct current power distribution apparatus 104 includes the plurality of input metal bars 1042, the power supply 200 is electrically connected to the input metal bars 1042. After power conversion is performed on a current provided by the power supply 200, a current is transferred to the first switch component 1041 through the input metal bar 1042. When the first switch component 1041 is closed, the first switch component 1041 allows the current to be output from the output end of the first switch component 1041, and the current output from the output end of the first switch component 1041 flows through the output metal bar 1043 to the cable 106, is transferred to a corresponding charging connector 105 through the cable 106, and then charges the to-be-charged device through the charging connector 105.

Both the cable outlet 1015 of the cable 106 and the first switch component 1041 are provided on the first cabinet panel 1011, so that the cable 106 is led out nearby, and a length of the cable 106 retained in the device cabinet 101 is shortened. In addition, the cable outlet 1015 is located above the first switch component 1041, so that the cable 106 extends out from an upper portion of the device cabinet 101, and a weight of the cable 106 can be effectively shared, thereby making a process of using the charging connector 105 more labor-saving and an operation more convenient for the user.

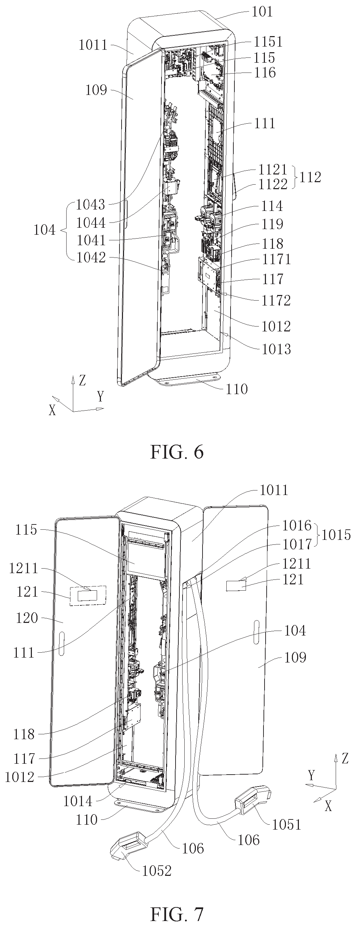

In addition, in some embodiments, the charging device 100 further includes a first control board 115. FIG. 6 shows an example of a structure of the first control board 115. Refer to FIG. 6. The first control board 115 is a circuit board that performs a control function in the device cabinet 101. For example, the first control board 115 may control opening and closing of the first switch component 1041.

Refer to FIG. 6. The first control board 115 is fastened inside the device cabinet 101 and located on a side that is of the plurality of first switch components 1041 and that faces away from the first cabinet door 109. In other words, when a person opens the first cabinet door 109 and faces the first opening 1013, the first control board 115 is located behind the plurality of first switch components 1041. In addition, one board surface of the first control board 115 faces the first cabinet door 109. The first control board 115 is disposed on a side that is of the first switch component 1041 and that faces away from the first cabinet door 109. When the first switch component 1041 needs to be maintained, after the first cabinet door 109 is opened, interference with maintenance of the first switch component 1041 caused by the first control board 115 is reduced. In addition, the first control board 115 is far away from the first cabinet door 109. In a process of opening the first cabinet door 109 to maintain another apparatus (an apparatus other than the first control board 115) in the device cabinet 101, a possibility of the first control board 115 being damaged can also be reduced, thereby protecting the circuit board.

The first control board 115 may be fastened in the device cabinet 101 in any appropriate manner. For example, a side portion that is of the first control board 115 and that is close to the first cabinet panel 1011 is fastened to the first cabinet panel 1011 through a bolt, and a side portion that is of the first control board 115 and that is close to the second cabinet panel 1012 is fastened to the first cabinet panel 1011 through a bolt. For another example, the first control board 115 is fastened on a bracket, and the bracket is fastened on the first cabinet panel 1011 and the second cabinet panel 1012. For another example, the first control board 115 is fastened on the top of the device cabinet 101.

Because the plurality of first switch components 1041 are arranged in the width direction of the device cabinet 101, the plurality of first switch components 1041 occupy large space in the width direction of the device cabinet 101. Refer to FIG. 4. When the charging device 100 includes the first control board 115, the first control board 115 is located above the cable outlet 1015. In this way, the first control board 115 and the plurality of first switch components 1041 are staggered, so that the size of the device cabinet 101 in the width direction of the device cabinet 101 is reduced. In other words, a width of the device cabinet 101 is reduced.

In addition, the first control board 115 and the plurality of first switch components 1041 are staggered, so that the plurality of first switch components 1041 do not obstruct the first control board 115, and a part that is of the cable 106 and that is located in the device cabinet 101 does not cause significant obstruction to the first control board 115. After the first cabinet door 109 is opened, the first control board 115 can be repaired without removing the first switch component 1041 or the cable 106, to facilitate maintenance of the first control board 115.

Refer to FIG. 6. When the charging device 100 includes the first control board 115, a plurality of electronic components 1151 (including a controller or a control chip) on the first control board 115 face the first cabinet door 109. When the first control board 115 needs to be maintained, after the first cabinet door 109 is opened, the plurality of electronic components 1151 on the first control board 115 are oriented toward a person, so that a person can conveniently maintain the electronic components 1151 on the first control board 115.

In some embodiments, refer to FIG. 6. The charging device 100 further includes a second control board 116, and the second control board 116 is also a circuit board that performs a control function in the device cabinet 101. For example, the second control board 116 may be connected to a ring network. For another example, the second control board 116 may control display content of the display 111. For another example, the second control board 116 may control the card reading apparatus 112. The second control board 116 is fastened on the second cabinet panel 1012, and one board surface of the second control board 116 faces the first cabinet panel 1011, so that the second control board 116 and the first direct current power distribution apparatus 104 are spaced apart, thereby reducing a possibility of interference. After the first cabinet door 109 is opened, the plurality of first switch components 1041 may be maintained by facing the first cabinet panel 1011, and the second control board 116 may be maintained by facing the second cabinet panel 1012. This facilitates maintenance of the charging device 100.

In addition, when the charging device 100 further includes the display 111, the second control board 116 is located above the display 111. In this way, a position of the second control board 116 is higher, and if water enters the inside of the charging device 100, a risk of the second control board 116 being submerged in water is reduced. In addition, when both the first control board 115 and the second control board 116 are fastened inside the device cabinet 101, because the first control board 115 is higher than the cable outlet 1015 (a position of the first control board 115 is higher), the position of the second control board 116 is also disposed higher, so that the second control board 116 can be close to the first control board 115. This facilitates a connection between the first control board 115 and the second control board 116 through an electronic cable.

It should be noted that the charging device 100 may include only the first control board 115 without disposing the second control board 116. In this embodiment, the first control board 115 also has a function of the second control board 116. The charging device 100 may alternatively include only the second control board 116 without disposing the first control board 115. In this embodiment, the second control board 116 also has a function of the first control board 115. The charging device 100 may further include both the first control board 115 and the second control board 116. It may be understood that, in this embodiment, the first control board 115 and the second control board 116 are two circuit boards with different functions.

In some embodiments, refer to FIG. 6. The charging device 100 may further include a power supply apparatus 117 (auxiliary power supply). The power supply apparatus 117 is electrically connected to the power supply 200. The power supply apparatus 117 is further electrically connected to at least one of the first control board 115 and the second control board 116. The power supply apparatus 117 is configured to: convert an alternating current input by the power supply 200 into a direct current, and supply power to at least one of the first control board 115 and the second control board 116. In other words, the power supply apparatus 117 is a small-sized power conversion apparatus.

The power supply apparatus 117 may be fastened at any appropriate position. For example, refer to FIG. 6. The power supply apparatus 117 is located in the device cabinet 101 and connected to the second cabinet panel 1012, and the power supply apparatus 117 is slidable relative to the second cabinet panel 1012 in a direction close to or away from the first cabinet door 109. In other words, after the first cabinet door 109 is opened, the power supply apparatus 117 can be drawn out in the width direction (the X-axis direction) of the device cabinet 101. Any connection structure that can implement sliding of the power supply apparatus 117 relative to the second cabinet panel 1012 can be used to connect the power supply apparatus 117 to the second cabinet panel 1012.

In the embodiment shown in FIG. 6, a mounting enclosure 1171 is fastened on the second cabinet panel 1012, and the mounting enclosure 1171 is provided with a mounting opening 1172 facing the first opening 1013. The power supply apparatus 117 may be inserted into the mounting enclosure 1171 through the mounting opening 1172 in the width direction (the X-axis direction) of the device cabinet 101, and the power supply apparatus 117 may also be removed from the mounting enclosure 1171 through the mounting opening 1172 in the width direction of the device cabinet 101.

In some other embodiments, a sliding groove is disposed on the second cabinet panel 1012, a sliding block is disposed on the power supply apparatus 117, and a sliding block on the power supply apparatus 117 is slidable in the sliding groove on the second cabinet panel 1012, so that a sliding connection between the power supply apparatus 117 and the second cabinet panel 1012 is implemented through cooperation between the sliding block and the sliding groove. The power supply apparatus 117 is disposed to be slidable relative to the device cabinet 101, to facilitate mounting and removal of the power supply apparatus 117.

After the first cabinet door 109 is opened, in a process of drawing out the power supply apparatus 117, the power supply apparatus 117 slides in a direction close to or away from the first opening 1013, and the first opening 1013 communicates with external space. When the power supply apparatus 117 needs to be removed, a person draws the power supply apparatus 117 outward at the first opening 1013, so that the power supply apparatus 117 moves close to the first opening 1013, and the power supply apparatus 117 is gradually drawn out of the device cabinet 101, to remove the power supply apparatus 117. When the power supply apparatus 117 needs to be mounted, the power supply apparatus 117 is pushed toward the inside of the device cabinet 101. After the power supply apparatus 117 is located in the device cabinet 101, the power supply apparatus 117 is pushed continuously in the direction away from the first opening 1013, to complete mounting of the power supply apparatus 117.

Refer to FIG. 6. The plurality of first switch components 1041 on the first cabinet panel 1011 need to be connected to the cable 106. Therefore, in this application, the power supply apparatus 117 is disposed on the second cabinet panel 1012, so that the power supply apparatus 117 is slidable relative to the second cabinet panel 1012. In this way, the power supply apparatus 117 can be removed through the first opening 1013, impact of the power supply apparatus 117 on wiring of the plurality of first switch components 1041 is further reduced, and a layout inside the device cabinet 101 is more proper.

In addition, in an embodiment in which the charging device 100 includes the display 111 and the second control board 116, because the second control board 116 is located above the display 111, the power supply apparatus 117 may be disposed below the display 111, so that the second control board 116, the display 111, and the power supply apparatus 117 are arranged in the height direction (the Z-axis direction) of the device cabinet 101, the size of the device cabinet 101 in the width direction (the X-axis direction) can be reduced, and the area occupied by the device cabinet 101 is reduced. In addition, the display 111 is disposed between the second control board 116 and the power supply apparatus 117, so that the display 111 can further be located at a position that is convenient for a person to view. If the display 111 is located below the second control board 116 and the power supply apparatus 117, a position of the display 111 is lower. If the display 111 is located above the second control board 116 and the power supply apparatus 117, a position of the display 111 is higher, which is not conducive to viewing by a person.

Refer to FIG. 6. The charging device 100 further includes a second switch component 118 (for example, an air circuit breaker, a circuit breaker, or a contactor). An input end of the second switch component 118 is electrically connected to the power supply 200 through a wire. An output end of the second switch component 118 is electrically connected to the power supply apparatus 117 through a wire. The second switch component 118 can control connection and disconnection of a circuit between the power supply apparatus 117 and the power supply 200.

When the charging device 100 further includes the second switch component 118, the second switch component 118 may be fastened on the second cabinet panel 1012, so that the second switch component 118 is located opposite the plurality of first switch components 1041, and the size of the device cabinet 101 in the width direction (the X-axis direction) can be reduced. In addition, the second switch component 118 and the power supply apparatus 117 are arranged in the height direction (the Z-axis direction) of the device cabinet 101. In this way, space under the display 111 is fully utilized, the size of the device cabinet 101 in the width direction can further be reduced, and an internal layout of the device cabinet 101 is more proper.

In some embodiments, refer to FIG. 6. When the charging device 100 further includes a wiring terminal 119, the power supply apparatus 117 is connected to the wiring terminal 119 through a first electronic cable, the wiring terminal 119 is connected to apparatuses such as the display 111 and a control board (the first control board 115 and/or the second control board 116) through a plurality of second electronic cables, and the power supply apparatus 117 supplies power to the plurality of apparatuses such as the display 111 and the control board, and the wiring terminal 119 functions as a transfer connection.

In the embodiment shown in FIG. 6, the wiring terminal 119 and the power supply apparatus 117 are arranged in the height direction (the Z-axis direction) of the device cabinet 101, so that the size of the device cabinet 101 in the width direction is reduced. When the charging device 100 further includes the second switch component 118, the wiring terminal 119 and the second switch component 118 are arranged in the width direction (the X-axis direction) of the device cabinet 101. In this way, space of the device cabinet 101 in the height direction can be saved, and positions of the wiring terminal 119, the second switch component 118, and the power supply apparatus 117 are more compact. In some embodiments, both the wiring terminal 119 and the second switch component 118 are disposed above the power supply apparatus 117, so that positions of the wiring terminal 119 and the second switch component 118 are higher. If water enters the inside of the charging device 100, a risk of the wiring terminal 119 and the second switch component 118 being wetted by water is reduced.

In some embodiments, the charging device 100 further has another repair door. For example, the charging device 100 further includes a second cabinet door 120. FIG. 7 shows an example of a structure of the second cabinet door 120. Refer to FIG. 7. The device cabinet 101 has a second opening 1014 that communicates with internal space of the device cabinet 101. The second opening 1014 is located between the first cabinet panel 1011 and the second cabinet panel 1012. The second opening 1014 and the first opening 1013 are arranged in the width direction (the X-axis direction) of the device cabinet 101. The second cabinet door 120 is located between the first cabinet panel 1011 and the second cabinet panel 1012. In addition, when both the first cabinet door 109 and the second cabinet door 120 are in a closed state, the first cabinet door 109 and the second cabinet door 120 are arranged in the width direction of the device cabinet 101.

In the embodiment shown in FIG. 7, the second cabinet door 120 is connected to the second cabinet panel 1012. In some other embodiments, the second cabinet door 120 is connected to the first cabinet panel 1011, and the second cabinet door 120 is movable relative to the device cabinet 101 (for example, the second cabinet door 120 is connected to the device cabinet 101 via a hinge). In addition, the second cabinet door 120 is configured to open or seal the device cabinet 101. For example, when the second cabinet door 120 seals the second opening 1014, the second cabinet door 120 also seals the device cabinet 101. When the second cabinet door 120 opens the second opening 1014, the second cabinet door 120 also opens the device cabinet 101.

When the charging device 100 includes the first control board 115, the first control board 115 is located on a side that is of the plurality of first switch components 1041 and that faces the second cabinet door 120. In other words, the first control board 115 is closer to the second cabinet door 120. When the first control board 115 needs to be removed, the second cabinet door 120 may also be opened to expose the first control board 115, so that a person can conveniently remove the first control board 115. Similarly, when the first control board 115 needs to be mounted, the second cabinet door 120 may also be opened, and the first control board 115 is mounted through the second opening 1014.

In some embodiments, the charging device 100 further includes a plurality of electricity meters 121. Refer to FIG. 7. When the charging device 100 further includes the first cabinet door 109 and the second cabinet door 120, one electricity meter 121 is fastened on each of the first cabinet door 109 and the second cabinet door 120. A display region of the electricity meter 121 on the first cabinet door 109 is exposed outside the device cabinet 101 through a window 1211 on the first cabinet door 109, and a display region of the electricity meter 121 on the second cabinet door 120 is exposed outside the device cabinet 101 through a window 1211 on the second cabinet door 120, so that a person can conveniently observe values of the electricity meter 121.

Each electricity meter 121 can display charging data of a corresponding charging connector 105, to measure a charging amount of the charging device 100. The electricity meter 121 may detect the charging data of the charging connector 105 in any appropriate manner. For example, the first direct current power distribution apparatus 104 of the charging device 100 further includes a shunt. The shunt may be a metal bar (for example, a copper bar or an aluminum bar). The shunt is fastened on the input metal bar 1042 or the output metal bar 1043. The shunt is electrically connected to the electricity meter 121. The electricity meter 121 detects a current flowing through the shunt to determine a magnitude of a current flowing through the input metal bar 1042 or the output metal bar 1043, thereby detecting the charging data of the corresponding charging connector 105.

Refer to FIG. 7. The cable outlet 1015 includes a first cable outlet 1016 and a second cable outlet 1017 that are arranged in the width direction (the X-axis direction) of the device cabinet 101. The first cable outlet 1016 is located on a side that is of the second cable outlet 1017 and that faces the first cabinet door 109. The plurality of charging connectors 105 include a first charging connector 1051 and a second charging connector 1052. The first charging connector 1051 is electrically connected to a cable 106 that passes through the first cable outlet 1016. The second charging connector 1052 is electrically connected to a cable 106 that passes through the second cable outlet 1017. In other words, a person may stand on different sides of the device cabinet 101 to use the first charging connector 1051 and the second charging connector 1052. For example, when the first charging connector 1051 is used, a person may stand near the first cabinet door 109, and when the second charging connector 1052 is used, a person may stand near the second cabinet door 120.

Different electricity meters 121 are disposed on the first cabinet door 109 and the second cabinet door 120. In addition, the electricity meter 121 on the first cabinet door 109 is configured to display charging data of the first charging connector 1051, and the electricity meter 121 on the second cabinet door 120 is configured to display charging data of the second charging connector 1052. When a person uses the first charging connector 1051 to charge the to-be-charged device, the electricity meter 121 on the first cabinet door 109 can reflect a charging status of the first charging connector 1051. Similarly, when a person uses the second charging connector 1052 to charge the to-be-charged device, the electricity meter 121 on the second cabinet door 120 can reflect a charging status of the second charging connector 1052. In this design manner, when a person uses different charging connectors 105, the electricity meters 121 located on the different sides of the device cabinet 101 facilitate observation of charging values by a person.

In addition, because both the first cabinet door 109 and the second cabinet door 120 are adjacent to the second cabinet panel 1012 on which the display 111 is located, the electricity meter 121 is disposed on the first cabinet door 109 and the second cabinet door 120. This also facilitates comparison, by a person, of data displayed on the display 111 and data displayed on the electricity meter 121.

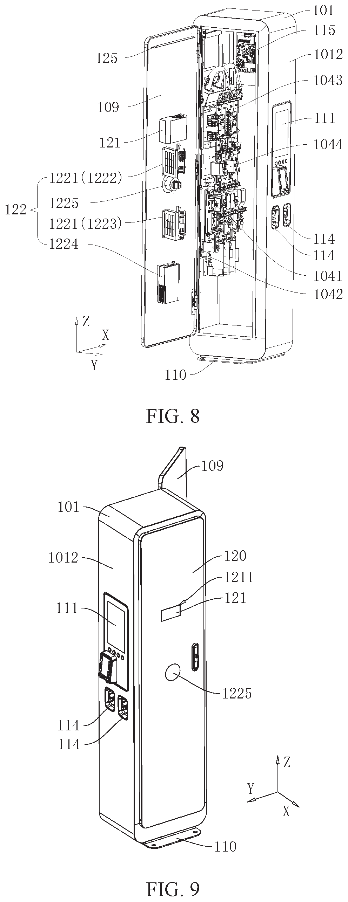

In some embodiments, the charging device 100 further includes a functional component 122 configured to implement a specific function. FIG. 8 shows an example of a structure of the functional component 122. Refer to FIG. 8. The functional component 122 includes a mix-flow fan 1221. The mix-flow fan 1221 may be disposed at any appropriate position. For example, the mix-flow fan 1221 is fastened on the first cabinet door 109. In addition, the mix-flow fan 1221 is configured to blow air into the device cabinet 101. For example, the mix-flow fan 1221 may blow air into a part with severe heat generation in the device cabinet 101, to eliminate a local hot spot in the device cabinet 101, so that a temperature inside the device cabinet 101 is more uniform.

Refer to FIG. 8. The mix-flow fan 1221 may include a first mix-flow fan 1222. The first mix-flow fan 1222 is located in the device cabinet 101 and fastened on the first cabinet door 109. After the first cabinet door 109 is closed, an air outlet end of the first mix-flow fan 1222 faces the inside of the device cabinet 101. The first mix-flow fan 1222 blows heat inside the device cabinet 101 onto the device cabinet 101, and then exchanges heat with external air through the device cabinet 101, to implement heat dissipation. In addition, in some embodiments, because the output metal bar 1043 generates severe heat due to long-time current flow, the air outlet end of the first mix-flow fan 1222 may blow air to the output metal bar 1043, blow heat on the output metal bar 1043 onto the device cabinet 101, and then exchanges heat with external air through the device cabinet 101, to implement heat dissipation.

Refer to FIG. 8. In some embodiments, the mix-flow fan 1221 may further include a second mix-flow fan 1223. The second mix-flow fan 1223 is located in the device cabinet 101 and fastened on the first cabinet door 109. An air outlet end of the second mix-flow fan 1223 faces the first switch component 1041, or an air outlet end of the second mix-flow fan 1223 faces the input metal bar 1042. Because the input metal bar 1042 and the first switch component 1041 generate severe heat due to long-time current flow, the second mix-flow fan 1223 blows air to the input metal bar 1042 or the first switch component 1041, blows heat on the input metal bar 1042 and the first switch component 1041 onto the device cabinet 101, and then exchanges heat with external air through the device cabinet 101, to implement heat dissipation.

In the embodiment shown in FIG. 8, the electricity meter 121 on the first cabinet door 109 is located above the first mix-flow fan 1222 and the second mix-flow fan 1223. In some other embodiments, the electricity meter 121 on the first cabinet door 109 is located between the first mix-flow fan 1222 and the second mix-flow fan 1223, or the electricity meter 121 on the first cabinet door 109 is located below the first mix-flow fan 1222 and the second mix-flow fan 1223.

In some other embodiments, only one mix-flow fan 1221 may be disposed in the device cabinet 101 (for example, only the first mix-flow fan 1222 is disposed, or only the second mix-flow fan 1223 is disposed). In some other embodiments, the mix-flow fan 1221 may alternatively not be disposed in the device cabinet 101.

In some other embodiments, when the second cabinet door 120 is mounted in the device cabinet 101, the mix-flow fan 1221 may be fastened on the second cabinet door 120, and the mix-flow fan 1221 is configured to blow air into the device cabinet 101.

Refer to FIG. 8. The functional component 122 may further include a heating apparatus 1224. When an ambient temperature is low, the heating apparatus 1224 is configured to heat the internal space of the device cabinet 101, so that some apparatuses or components (for example, the display 111) that are not resistant to low temperatures can operate normally. The heating apparatus 1224 may be any apparatus that can generate heat. For example, the heating apparatus 1224 includes a resistance wire and a fan, and the fan blows heat generated by the resistance wire into the device cabinet 101.

The heating apparatus 1224 may be disposed at any appropriate position in the device cabinet 101. In the embodiment shown in FIG. 8, the heating apparatus 1224 is fastened on the first cabinet door 109, and the heating apparatus 1224 is located on a side that is of the second mix-flow fan 1223 and that faces away from the first mix-flow fan 1222. In some other embodiments, the heating apparatus 1224 is located between the first mix-flow fan 1222 and the second mix-flow fan 1223. In some other embodiments, the charging device 100 may alternatively not include the heating apparatus 1224.

In some other embodiments, when the second cabinet door 120 is mounted in the device cabinet 101, the heating apparatus 1224 may be fastened on the second cabinet door 120.

In some embodiments, refer to FIG. 8. The functional component 122 may further include an emergency stop button 1225. When an emergency hazard occurs in a process of using the charging device 100, the emergency stop button 1225 may control the first switch component 1041 to disconnect a circuit between the power supply 200 and the charging connector 105. The emergency stop button 1225 may be disposed at any appropriate position. In the embodiment shown in FIG. 8, the emergency stop button 1225 is fastened on the first cabinet door 109, and the emergency stop button 1225 is located between the first mix-flow fan 1222 and the second mix-flow fan 1223. In some other embodiments, the emergency stop button 1225 is located above (or below) the first mix-flow fan 1222 and the second mix-flow fan 1223.

In some other embodiments, when the second cabinet door 120 is mounted in the device cabinet 101, the emergency stop button 1225 may alternatively be fastened on the second cabinet door 120. For example, FIG. 9 shows an example of a structure of another functional component 122. Refer to FIG. 9. The emergency stop button 1225, which is a part of the functional component 122, is fastened on the second cabinet door 120. In some other embodiments, the charging device 100 may alternatively not include the emergency stop button 1225.

When a person needs to repair an internal apparatus of the device cabinet 101, after the first cabinet door 109 is opened, apparatuses on the first cabinet door 109 inevitably collide with a person or a maintenance tool. The heating apparatus 1224, the mix-flow fan 1221, or the emergency stop button 1225 are all functional components 122 that are not prone to damage. The functional component 122 (including at least one of the heating apparatus 1224, the mix-flow fan 1221, or the emergency stop button 1225) is disposed on the first cabinet door 109, so that the first cabinet panel 1011 and the second cabinet panel 1012 have larger space for mounting damage-prone apparatuses. After the first cabinet door 109 is opened, some apparatuses that are not prone to damage (for example, functional components 122) are exposed along with the first cabinet door 109, and some damage-prone apparatuses are still located in the device cabinet 101, so that a layout of the internal apparatuses in the device cabinet 101 is more proper, and an overall service life of the charging device 100 is prolonged.

In addition, when water accumulates on the top of the first cabinet door 109, a water blocking structure may be further disposed on the first cabinet door 109. For example, refer to FIG. 8. The charging device 100 may further include a baffle plate 125. The baffle plate 125 is fastened on the first cabinet door 109. The baffle plate 125 extends toward the internal space of the device cabinet 101 (when the first cabinet door 109 is in the closed state). When the functional component 122 (including at least one of the heating apparatus 1224, the mix-flow fan 1221, or the emergency stop button 1225) is disposed on the first cabinet door 109, the baffle plate 125 is located above the functional component 122. For example, in the embodiment shown in FIG. 8, the heating apparatus 1224, the electricity meter 121, the mix-flow fan 1221, and the emergency stop button 1225 are disposed on the first cabinet door 109, and the heating apparatus 1224, the electricity meter 121, the mix-flow fan 1221, and the emergency stop button 1225 are all located below the baffle plate 125. After the first cabinet door 109 is opened, liquid dripping from the top of the first cabinet door 109 can be blocked and stopped to some extent due to existence of the baffle plate 125, so that a possibility of a short circuit occurring among a plurality of apparatuses on the first cabinet door 109 caused by liquid dripping from the top of the first cabinet door 109 is reduced.

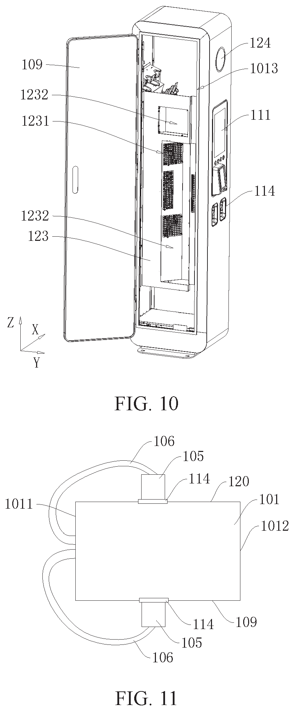

In some other embodiments, the charging device 100 further includes a structure that can shield the first switch component 1041. For example, the charging device 100 further includes a protective cover 123. FIG. 10 shows an example of a structure of the protective cover 123. Refer to FIG. 10. The protective cover 123 is fastened inside the device cabinet 101. The protective cover 123 is located on a side that is of the plurality of first switch components 1041 (shielded by the protective cover 123 in FIG. 10) and that faces the first cabinet door 109. The protective cover 123 is configured to shield the first direct current power distribution apparatus 104 (including the plurality of first switch components 1041). In other words, after the first cabinet door 109 is opened, the protective cover 123 can shield the first direct current power distribution apparatus 104, so that the first direct current power distribution apparatus 104 is not exposed, thereby protecting both a person and the first direct current power distribution apparatus 104.

The protective cover 123 may be fastened inside the device cabinet 101 in any appropriate manner. In the embodiment shown in FIG. 10, a side portion that is of the protective cover 123 and that is close to the first cabinet panel 1011 is fastened to the first cabinet panel 1011 (for example, fastened through a bolt), and a side portion that is of the protective cover 123 and that is close to the second cabinet panel 1012 is fastened to the second cabinet panel 1012 (for example, fastened through a bolt). In some other embodiments, the protective cover 123 is fastened (for example, through a bolt) on the first cabinet panel 1011, and the protective cover 123 is not connected to the second cabinet panel 1012; or the protective cover 123 is fastened (for example, through a bolt) on the second cabinet panel 1012, and the protective cover 123 is not connected to the first cabinet panel 1011. When the first switch component 1041 needs to be repaired, the protective cover 123 can simply be removed.

When the charging device 100 further includes the functional component 122, the functional component 122 is fastened on the first cabinet door 109, and at least one avoidance groove 1232 used to avoid the functional component 122 is disposed on the protective cover 123. In addition, when the functional component 122 includes the mix-flow fan 1221, an air vent 1231 is further disposed on the protective cover 123. The air vent 1231 faces the air outlet end of the mix-flow fan 1221, and air blown by the mix-flow fan 1221 can pass through the air vent 1231.

When the charging device 100 further includes the second cabinet door 120, the protective cover 123 may alternatively be disposed on the side that is of the plurality of first switch components 1041 and that faces the second cabinet door 120. In other words, when the second cabinet door 120 is opened, the protective cover 123 shields the first direct current power distribution apparatus 104, and the protective cover 123 needs to be removed to repair the first direct current power distribution apparatus 104 through the second opening 1014.

Refer to FIG. 10. In some embodiments, the charging device 100 may further include a display light 124. The display light 124 is located above the display 111. The display light 124 is configured to display a charging status of the charging device 100. For example, the display light 124 changes a color or a shape to convey information such as charging, standby, a fault, reservation, and a charging amount.

In addition, FIG. 11 shows an example of a position of another plug holder 114. Refer to FIG. 11. When the charging device 100 includes the first cabinet door 109 and the second cabinet door 120, one of the plug holders 114 is fastened on the first cabinet door 109, and the other plug holder 114 is fastened on the second cabinet door 120.

In some other embodiments, the charging device 100 may further include a plug cable management apparatus. The plug cable management apparatus is fastened on the top of the device cabinet 101. The plug cable management apparatus can lift the plurality of cables 106 and share a part of a weight of the cables 106, so that the process of using the charging connector 105 by a user is more labor-saving.

In some embodiments, the charging device 100 is a naturally cooled charging pile. To be specific, no structure such as a water tank (configured to accommodate coolant), a drive pump (configured to circulate the coolant), or a cooling pipe (configured to allow the coolant to flow and to cool the cable 106) is disposed inside the device cabinet 101.

It may be understood that, in this application, the width direction of the device cabinet 101, the thickness direction of the device cabinet 101, and the height direction of the device cabinet 101 are perpendicular to each other, and the X-axis, the Y-axis, and the Z-axis in a coordinate system are perpendicular to each other.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A charging device, comprising:
a device cabinet, wherein the device cabinet comprises a first cabinet panel and a second cabinet panel arranged in a thickness direction of the device cabinet;
a first cabinet door, wherein the first cabinet door is connected to the second cabinet panel or the first cabinet panel;
a plurality of first switch components, wherein the plurality of first switch components are located in the device cabinet and fastened on the first cabinet panel, the plurality of first switch components are arranged in a width direction of the device cabinet, and input ends of the plurality of first switch components are configured to electrically connect to a power supply;
a plurality of charging connectors, wherein the plurality of charging connectors are located outside the device cabinet and configured to connect to a to-be-charged device; and
a plurality of cables, wherein the first cabinet panel is provided with a cable outlet that is used for the plurality of cables to pass through, the cable outlet is located above the first switch component, a part that is of each cable and that is located outside the device cabinet is electrically connected to one charging connector, and a part that is of each cable and that is located in the device cabinet is electrically connected to an output end of at least one first switch component, wherein
the charging device further comprises a first control board and/or a second control board, the first control board is fastened inside the device cabinet and located on a side that is of the plurality of first switch components and that faces away from the first cabinet door, one board surface of the first control board faces the first cabinet door, the first control board is located above the cable outlet, the second control board is fastened on the second cabinet panel, and one board surface of the second control board faces the first cabinet panel.

2. The charging device according to claim 1, wherein a plurality of electronic components on the first control board face the first cabinet door.

3. The charging device according to claim 1 or 2, wherein the charging device further comprises a display, the display is fastened on the second cabinet panel, a display region of the display is exposed outside the device cabinet, and the second control board is located above the display.

4. The charging device according to claim 3, wherein the charging device further comprises a power supply apparatus, the power supply apparatus is located in the device cabinet and connected to the second cabinet panel, and the power supply apparatus is located below the display; and
the power supply apparatus is electrically connected to the power supply, the power supply apparatus is further electrically connected to the first control board and/or the second control board, and the power supply apparatus is configured to: perform power conversion on electric energy input by the power supply, and output converted electric energy to the first control board and/or the second control board, to supply power to the first control board and/or the second control board.

5. The charging device according to claim 4, wherein the power supply apparatus is slidable relative to the second cabinet panel in a direction close to or away from the first cabinet door.

6. The charging device according to claim 4 or 5, wherein the charging device further comprises a second switch component, the second switch component is fastened on the second cabinet panel, the second switch component and the power supply apparatus are arranged in a height direction of the device cabinet, an input end of the second switch component is configured to electrically connect to the power supply, and an output end of the second switch component is electrically connected to the power supply apparatus.

7. The charging device according to any one of claims 1 to 6, wherein the charging device further comprises a second cabinet door, the second cabinet door and the first cabinet door are arranged in the width direction of the device cabinet, and the second cabinet door is connected to the second cabinet panel or the first cabinet panel.

8. The charging device according to claim 7, wherein the charging device further comprises a plurality of electricity meters, one electricity meter is fastened on each of the first cabinet door and the second cabinet door, the electricity meter on the first cabinet door is exposed outside the device cabinet through a window on the first cabinet door, and the electricity meter on the second cabinet door is exposed outside the device cabinet through a window on the second cabinet door;
the cable outlet comprises a first cable outlet and a second cable outlet that are arranged in the width direction of the device cabinet, and the first cable outlet is located on a side that is of the second cable outlet and that faces the first cabinet door; and
the plurality of charging connectors comprise a first charging connector and a second charging connector, the first charging connector is electrically connected to the cable that passes through the first cable outlet, the second charging connector is electrically connected to the cable that passes through the second cable outlet, the electricity meter on the first cabinet door is configured to display charging data of the first charging connector, and the electricity meter on the second cabinet door is configured to display charging data of the second charging connector.

9. The charging device according to any one of claims 1 to 8, wherein the charging device further comprises a protective cover, the protective cover is fastened inside the device cabinet, the protective cover is located on a side that is of the plurality of first switch components and that faces the first cabinet door, and the protective cover shields the first switch component.

10. The charging device according to any one of claims 1 to 9, wherein the charging device further comprises a functional component, the functional component comprises at least one of the following: a heating apparatus, a mix-flow fan, or an emergency stop button, and the functional component is located in the device cabinet and fastened on the first cabinet door; and
the heating apparatus is configured to heat internal space of the device cabinet, the mix-flow fan is configured to blow air into the device cabinet, and the emergency stop button is configured to control the first switch component to disconnect a circuit between the power supply and the charging connector.

11. The charging device according to any one of claims 1 to 10, wherein the charging device further comprises a mounting plate, the mounting plate is fastened at a bottom of the device cabinet, at least a part of the mounting plate is located on an outer side of the device cabinet, a part that is of the mounting plate and that is located on the outer side of the device cabinet is provided with a through hole, the through hole is used for a fastener to pass through, and the fastener is configured to fasten the mounting plate to a specified position.
